# EUROPÄISCHE PATENTSCHRIFT

(11) **EP 4 264 214 B1**
(45) Veröffentlichungstag und Bekanntmachung des Hinweises auf die Patenterteilung: **20.08.2025**
(21) Anmeldenummer: 21840842.5
(22) Anmeldetag: 16.12.2021
(51) Int. Cl.: G01K 13/08, G01M 13/04

(54) **SYSTEM UND VERFAHREN ZUR THERMISCHEN ÜBERWACHUNG GROSSER WÄLZLAGER**
SYSTEM AND METHOD FOR THERMAL MONITORING OF A LARGE ROLLING BEARING
SYSTÈME ET PROCÉDÉ DE SURVEILLANCE THERMIQUE DE GRANDS PALIERS À ROULEMENT

(30) Priorität: 17.12.2020 DE 102020216210
(43) Veröffentlichungstag der Anmeldung: 25.10.2023
(73) Patentinhaber: Fraunhofer-Gesellschaft zur Förderung der angewandten Forschung e.V., 80686 München (DE)
(72) Erfinder: STAMMLER, Matthias, 27572 Bremerhaven (DE)
(74) Vertreter: Pfenning, Meinig & Partner mbB
(86) Internationale Anmeldenummer: PCT/EP2021/086350
(87) Internationale Veröffentlichungsnummer: WO 2022/129440

(56) Entgegenhaltungen:
- EP-A2- 1 703 137
- EP-B1- 0 673 476
- EP-B1- 2 927 662
- US-A1- 2016 069 775

## Beschreibung

Die Erfindung betrifft ein System zur thermischen Überwachung großer Wälzlager, um Beschädigungen der Wälzlager frühzeitig und zuverlässig zu erkennen. Des Weiteren wird eine Windkraftanlage beschrieben, die ein solches System umfasst, sowie ein Verfahren zum Betrieb eines Wälzlagers, vorzugsweise eines Wälzlagers in einer Windkraftanlage.

Große Wälzlager, wie sie zum Beispiel in Windkraftanlagen, aber auch in Bohrmaschinen, Kränen und anderen industriellen oder Baumaschinen zum Einsatz kommen, sind mechanisch hochbelastete Bauteile. Sie werden daher mit höchsten Qualitätsansprüchen gefertigt und weisen dementsprechend lange Lebensdauern auf. Dennoch kann es im Betrieb zu Beschädigungen kommen, insbesondere an den Laufbahnen der inneren und äußeren Ringe, auf denen die Wälzkörper abrollen. Während kleinere Schäden zunächst tolerierbar sind, nehmen diese im weiteren Betrieb üblicherweise zu, so dass die Laufeigenschaften des Wälzlagers stark negativ beeinfluss werden und letztendlich ein Austausch des Lagers notwendig ist, um auch Folgeschäden zu vermeiden. Insbesondere bei Windkraftanalagen ist eine solche Reparatur aufwendig und teuer, während zusätzliche Kosten durch einen ungeplanten Ausfall der Anlage entstehen. Es ist daher also sinnvoll, mögliche Beschädigungen frühzeitig zu erkennen, um geeignete Maßnahmen, wie einen Austausch oder Eingriffe in die Betriebsführung zur Entlastung des Wälzlagers, zu ergreifen.

Bei kleineren Wälzlagern erfolgt eine solche Schadensfrüherkennung in der Regel über die Messung der Antriebsmomente. Bei großen Wälzlager muss auf Grund der hohen Reibmomente jedoch die Drehmomentmessung auf hohe Momente ausgelegt sein, während die relativen Veränderungen des Moments durch eine Beschädigung zunächst sehr klein sind, was eine Schadenserkennung sehr schwierig machen würde. Andere Methoden zur Schadensfrüherkennung bei Wälzlagern basieren auf der Überwachung von Vibrationen, Geräuschentwicklung oder der Verformung der Lagerringe. Diese Methoden sind jedoch technisch komplex, erfordern hohe Messfrequenzen und teure Sensoren.

Eine weitere Möglichkeit zur Erkennung von Schäden an einem Wälzlager ist die Überwachung der Temperatur des Lagers. Ein Schaden, zum Beispiel an der Lauffläche des Lagers, führt immer zu einer erhöhten Reibung in dem betroffenen Bereich, und damit auch zu einem Temperaturanstieg. In EP 2 927 662 B1 ist ein Verfahren zur Überwachung des Zustands eines Wälzlagers einer Windturbine vorgeschlagen, das darauf basiert, die Temperatur des Wälzlagers durch einen Vergleich mit der Temperatur in der Gondel einer Windturbine zu normieren und Abweichungen in dieser normierten Temperatur auszuwerten, um Schäden zu erkennen. Allerdings ist dieses Verfahren stark abhängig von der Position der Temperaturmesspunkte und dementsprechend unzuverlässig.

Aus US 2016/069775 A1 ist ein System zur Überwachung eines Wälzlagers bekannt, in dem mehrere Sensoren zur Erfassung von Vibrationen, Temperaturen, Schmierzustand und anderen Zuständen an einem Wälzlager und in dessen Umgebung vorgesehen sind und die erfassten Daten in einer Auswertungseinrichtung verarbeitet werden, um den Zustand des Lagers zu bewerten. EP 1 703 137 A2 offenbart außerdem ein Verfahren zur Überwachung eines Ventilators, in dem die Temperatur eines Lagers und eines den Ventilator antreibenden Elektromotors überwacht wird.

Eine Aufgabe des vorliegenden Gegenstands der Erfindung ist es daher, ein technisch einfach umsetzbares System vorzuschlagen, das eine zuverlässige Schadensfrüherkennung an großen Wälzlagern auf Basis von Temperaturmessungen ermöglicht.

Diese Aufgabe wird durch ein System gemäß dem unabhängigen Anspruch 1 gelöst. Eine Windkraftanlage, die ein solches System umfasst, wird in Anspruch 7 und eine Verfahren zum Betrieb einer solchen Windkraftanlage in Anspruch 12 beschrieben. Weitere vorteilhafte Ausführungsformen ergeben sich aus den abhängigen Ansprüchen.

Die Belastung eines Wälzlagers ist üblicherweise nicht über dessen gesamten Umfang gleich verteilt, wodurch sich spezifische Temperaturverteilungen ergeben, auf die eine Beschädigung großen Einfluss haben kann. Daher bietet es sich an, mehrere Temperatursensoren entlang des Umfangs des Wälzlagers zu verteilen, um diese Temperaturverteilung zu erfassen. Mindestens sind dafür zwei Sensoren in unterschiedlich stark belasteten Bereichen des Wälzlagers notwendig, sowie ein Temperatursensor in der Umgebung des Wälzlagers, der es ermöglicht die erfassten Temperaturen gegen äußere Einflüsse zu normieren.

Ein Wälzlager besteht aus einem äußeren Ring, einem Wälzkörper und einem inneren Ring. Der Wälzkörper rollt dabei auf den Laufflächen an der Innenseite des Außenrings und auf der Außenseite des Innenrings ab. Diese Laufflächen sind dabei besonders anfällig für Beschädigungen und daher sollten die Temperatursensoren möglichst nahe an ihnen platziert werden. Wälzlager sind dazu ausgelegt, gleichmäßig radiale Kräfte aufzunehmen und die Reibung zwischen inneren und äußeren Ring möglichst gering zu halten. Außerdem nehmen große Wälzlager jedoch in der Regel auch Biegemomente auf, sodass unterschiedlich stark belastete Bereiche des Wälzlagers entstehen. Ein hochbelasteter Bereich des Wälzlagers entsteht insbesondere durch das Einwirken hoher Kräfte auf den Wälzkörper. Eine solche Kraft wirkt beispielsweise durch die Masse einer schweren Welle oder in Windkraftanalgen auf Grund von aerodynamischen Kräften, die auf Rotorflügel wirken, welche an Rotorflügellagern befestigt sind. Durch diese zusätzlichen Kräfte ist in der Regel eine erhöhte Reibung des Wälzkörpers auf den Laufflächen in diesem Bereich des Wälzlagers bedingt. Außerhalb dieser hochbelasteten Bereiche wirken deutlich geringere Kräfte auf den Wälzkörper. Insgesamt wirken die Kräfte ungleich auf die Wälzlager, so dass zwischen hochbelasteten und weniger belasteten Bereichen unterschieden werden kann. Bei statischen Kräften, wie beispielsweise den wirkenden Massekräften einer Welle oder eines Rotorflügels, können die Kräfte vorab bestimmt werden, und somit die Orte, an welchen die Sensoren angeordnet werden sollen, ebenfalls vorab bestimmt werden. Bei dynamischen Kräften, wie z. B. den aufgrund des Windes auf die Rotorflügeln wirkenden Kräften, kann ebenfalls aufgrund der herrschenden Windverhältnisse bestimmt werden (beispielsweise mittels Simulationen oder Testständen), an welchen Bereichen mit erhöhten Belastungen zu rechnen ist.

Ein erster Temperatursensor wird in der Umgebung des Wälzlagers positioniert. Diese Umgebung ist mit dem Wälzlager thermisch gekoppelt, eine Temperaturänderung in der Umgebung auf Grund von äußeren Einflüssen wirkt sich also auch auf die Temperaturverteilung am Wälzlager aus. Im Falle eines Wälzlagers in einer Windkraftanlage könnte die Umgebung eines Wälzlagers beispielsweise innerhalb der Gondel, die das Wälzlager beherbergt, sein. Für anderer Großmaschinen kann die Umgebung als die Baugruppe des Wälzlagers definiert werden. Wichtig ist bei der Positionierung des ersten Temperatursensors, dass eine thermische Kopplung der Umgebung des Wälzlagers mit dem Wälzlager gegeben ist, die Positionen des ersten Temperatursensors und des Wälzlagers also ein ähnliches Temperaturverhalten aufweisen.

Ein zweiter Temperatursensor erfasst eine Lasttemperatur in einem hochbelasteten Bereich des Wälzlagers. Die Position des zweien Temperatursensors wird also abhängig von der Nutzung des Wälzlagers so gewählt, dass an dieser Position eine erhöhte radialen oder axiale Kraft auf den Wälzkörper wirkt. Auf Grund der zusätzlichen Belastung und der daraus resultierenden stärkeren Reibung wird die Lasttemperatur im Vergleich mit der Umgebungstemperatur und der Leerlauftemperatur in der Regel höher sein.

Ein dritter Temperatursensor erfasst eine Leerlauftemperatur in einem weniger oder nicht belasteten Bereich des Wälzlagers. Die Position des dritten Temperatursensors muss also abhängig von der Nutzung des Wälzlagers so gewählt werden, dass an dieser Position keine erhöhten radialen oder axialen Kräfte auf den Wälzkörper wirken. Allerdings soll die Verwendung des Begriffes Leerlauf hier nicht unbedingt bedeuten, dass das Wälzlager an dieser Position kraftfrei ist, im Vergleich mit einer Position in einem hochbelasteten Bereich sind die wirkenden Kräfte jedoch vernachlässigbar. Auf Grund der geringeren Belastung und der daraus resultierenden schwächeren Reibung wird die Leerlauftemperatur im Vergleich mit der Umgebungstemperatur und der Lasttemperatur in der Regel geringer sein.

Durch die Verwendung weiterer Temperatursensoren lässt sich die Temperaturverteilung entlang des Umfangs des Wälzlagers genauer erfassen. Diese können dazu in gleichen Abständen entlang des Umfangs verteilt sein oder auch jeweils Bereichen unterschiedlicher Belastungen zugeordnet sein.

Basis der Bewertung der Auswertungseinrichtung sind die mindestens drei erfassten Temperaturen. Ein Temperaturanstieg in Last- oder Leerlauftemperatur spricht für eine erhöhte Reibung im Wälzlager und ist ein Hinweis für eine Beschädigung. Das Erfassen einer Umgebungstemperatur ermöglicht es, Schäden unabhängig von Umgebungsbedingungen zu erkennen. Da der Temperaturanstieg abhängig von der Belastung ist, ermöglicht das Erfassen einer Lasttemperatur in einem stark belasteten Bereich und einer Leerlauftemperatur in einem weniger stark belasteten Bereich des Wälzlagers, bereits eine geringe Abweichung zu erfassen. Dazu kann beispielsweise die Differenz aus Lasttemperatur und Leerlauftemperatur gebildet werden und mit der Umgebungstemperatur normiert werden, um eine umgebungsunabhängige Temperaturdifferenz zwischen einem hochbelasteten und weniger belasteten Bereich zu erhalten. Diese kann mit einer bekannten Temperaturdifferenz für ein störungsfrei arbeitendes Wälzlager verglichen werden, die beispielsweise für dasselbe Wälzlager, oder ein Wälzlager gleicher Bauart, auf einem Prüfstand erfasst wurde. Weitere mögliche Quellen für Referenzwerte sind außerdem Simulationen oder Erfahrungswerte aus ähnlichen Anlagen. Liegt eine Abweichung zwischen erfasster Temperaturdifferenz und Referenzwert eines störungsfrei arbeitenden Wälzlagers außerhalb eines festgelegten Intervalls, wird dies als Hinweis auf eine Beschädigung gedeutet. Bei der Erfassung mehrerer Temperaturen an mehreren Messpunkten bietet sich ein Vergleich dieser Temperaturen mit Referenzwerten, die an denselben Messpunkten gemessen wurden an, um ein detailliertes Bild der Veränderung der Temperaturverteilung zu erhalten. Aus diesen lassen sich jedoch auch verschiedene Differenzen oder Verhältnisse bilden. In einer einfachsten Form erfolgt ein Vergleich der erfassten Temperaturen gegen die zu erwartenden Temperaturen eines fehlerfrei funktionierenden Wälzlagers. Sind die erfassten Temperaturen höher als die zu erwartenden, so kann dies als Hinweis auf einen Schaden des Wälzlagers gedeutet werden. Um die Referenzwerte zu erhalten, kann auf die Betriebshistorie des Wälzlagers zurückgegriffen werden, da bei einer korrekten Verbauung des Lagers davon auszugehen ist, dass dieses zumindest zu Beginn seines Betriebs unbeschädigt ist. Um den Vergleich zwischen Referenzwerten und erfassten Temperaturen zu ermöglichen, bietet sich eine Datenbank für die Referenzwerte an, deren Ausgestaltung verschiedene Ausführungsformen ermöglicht.

Die Auswertungseinrichtung kann dazu konfiguriert sein, ein Alarmsignal auszusenden, wenn ihre Bewertung des Zustandes des Wälzlagers auf eine Beschädigung hinweist. Insbesondere kann die Auswertungseinrichtung so konfiguriert sein, dass sie erst nach mehrmaliger Messung einer Abweichung, die auf eine Beschädigung hindeutet, ein Alarmsignal sendet, um einen Fehlalarm zu vermeiden. Das Alarmsignal kann kabelgebunden oder per Funk gesendet werden. Es kann sich um ein Datensignal mit umfangreichen Informationen zu Situation oder um ein einfaches Signal zur Veranlassung einer optischen oder akustischen Warnung handeln.

Zusätzlich zu den erfassten Temperaturen kann die Auswertungseinrichtung auch weitere Daten beziehen, die den Betriebszustand des Wälzlagers beschreiben. Diese Daten können von Sensoren oder von anderen Bauteilen der Gesamtvorrichtung, deren Bestandteil auch das Wälzlager ist, erfasst werden. Der Betriebszustand kann durch mindestens eine der folgenden Größen gegeben sein: am Wälzlager anliegende Last, Betriebsdauer, Drehzahl und/oder Schmierzustand des Wälzlagers. Einem so beschriebenen Betriebszustand können nun die erfassten Temperaturen, oder die aus ihnen gebildeten Differenzen oder Verhältnisse zugeordnet werden. Die Auswertungseinheit kann eine Datenbank umfassen, in der für einen Betriebszustand Referenzwerte der Temperaturen, Differenzen oder Verhältnisse hinterlegt sind. Bei diesen Referenzwerten kann es sich um praktisch ermittelte, abgeschätzte oder berechnete Werte handeln.

Enthält die Datenbank für einen Betriebszustand noch keine oder nur wenige Referenzwerte, so kann die Auswertungseinrichtung dazu ausgelegt sein, die durch die erfassten Temperaturen oder die aus ihnen gebildeten Differenzen oder Verhältnisse als neue Referenzwerte abzuspeichern. Auf diese Weise lässt sich die Datenbank vervollständigen und weitere Vergleiche mit einer statistisch relevanten Anzahl von Messwerten durchführen. Insbesondere ein erster Zeitraum der Betriebshistorie des Wälzlagers ist geeignet, um Referenzwerte zu erfassen, da davon auszugehen ist, dass das Wälzlager nach korrekter Montage unbeschädigt ist und störungsfrei betrieben werden kann und erst nach längerer Belastung erste Schäden entstehen.

Die Datenbank kann außerdem die Information enthalten, wie oft ein Betriebszustand bereits erfasst wurde. Bei dem Vergleich der erfassten Temperaturen mit den Referenzwerten können diese so mit der Anzahl der Messungen des erfassten Betriebszustandes gewichtet werden. So kann die Relevanz einer erfassten Abweichung besser bewertet werden.

Das beschriebene System zur Überwachung eines Wälzlagers ist insbesondere dazu geeignet, Wälzlager in einer Windkraftanlage zu überwachen.

Wird das System in einer Ausführung, in der der Betriebszustand erfasst und mit einer Datenbank verglichen wird, in einer Windkraftanlage verwendet, so sind Jahres- und Tageszeit, Niederschlag und Windgeschwindigkeit, sowie die von der Anlage erbrachte Leistung weitere Größen, um den Betriebszustand des Wälzlagers zu beschreiben. Diese Größen sind relevant, weil sie Einfluss auf die Temperatur und die Belastung eines Wälzlagers in einer Windkraftanlage haben können.

Insbesondere kann es vorgesehen sein, die erfassten Temperaturen für bestimmte Zeitintervalle, wie Tage, Wochen oder Monate statistisch auszuwerten, sodass sich Normgrößen für bestimmte Betriebszustände für diese Intervalle ergeben, zu den Abweichungen leicht festgestellt werden können. Dazu muss jedoch natürlich bekannt sein, dass das überwachte Wälzlager in dem untersuchten Zeitintervall ohne Störungen durch Beschädigungen arbeitete.

Als Quelle für fehlerfreie Referenzwerte kann wiederum ein erster Zeitraum nach Inbetriebnahme der Windkraftanlage dienen.

Des Weiteren kann das System einer Windkraftanalage so konfiguriert sein, dass die Datenbank nicht nur eigene Referenzwerte enthält, sondern auch Referenzwerte von anderen Windkraftanlagen, beispielsweise weiteren Anlagen im selben Windpark. Vorzugsweise handelt es sich dabei um Referenzwindkraftanlagen, die ähnlichen Bedingungen ausgesetzt sind, beispielsweise an ähnlichen Positionen im Windpark stehen. Zu diesem Zweck können diese Windkraftanlagen eine gemeinsame Datenbank besitzen.

Außerdem können, wenn das überwachte Wälzlager ein Rotorblattlager ist, das die Rotornabe mit einem Rotorblatt verbindet, auch weitere Rotorblattlager an derselben Windkraftanlage als Quelle für Referenzwerte zum Vergleich dienen.

Ein Verfahren zur Überwachung eines Wälzlagers ist in Anspruch 12 definiert.

Das Verfahren kann zusätzlich die Schritte umfassen, die erfassten Temperaturen einem Betriebszustand zuzuordnen, der mindesten mindestens eine der Größen anliegende Last, Betriebsdauer, Drehzahl und/oder Schmierzustand umfasst, und die erfassten Temperaturen mit für den Betriebszustand in einer Datenbank hinterlegten Referenzwerten zu vergleichen, um die Bewertung zu verbessern.

Bei einer oder mehreren Bewertungen des Zustands des Wälzlagers, die auf eine Beschädigung des Wälzlagers hinweisen, kann in einem zusätzlichen Schritt ein Alarmsignal ausgesendet werden.

Der erfasste Betriebszustand kann dabei wiederum Jahres- und Tageszeit, Niederschlag und Windgeschwindigkeit, sowie die von der Anlage erbrachte Leistung umfassen.

Das Verfahren kann außerdem umfassen, dass zu einem erfassten Betriebszustand mit fehlenden Referenzwerten die erfassten Temperaturen als neue Referenzwerte hinterlegt werden.

Zusätzlich kann das Verfahren vorschreiben, dass die hinterlegten Referenzwerte mit der Anzahl der Messungen des erfassten Betriebszustandes gewichtet werden, um die Relevanz einer erfassten Abweichung bewerten zu können.

Die beschriebenen Ausführungsformen der Gegenstände der vorliegenden Anmeldung können dabei sowohl einzeln verwendet als auch kombiniert werden, um zusätzliche Effekte zu erzielen und so ein einfaches, aber zuverlässiges System und Verfahren zur thermischen Überwachung großer Wälzlager, sowie eine diese nutzende Windkraftanlage zu bieten.

Die erwähnten, sowie weitere Aspekte der Erfindung werden ersichtlich anhand der detaillierten Beschreibung der Ausführungsbeispiele, die mit Hilfe der folgenden Zeichnungen gegeben wird, von welchen:
- Fig. 1: eine schematische Darstellung eines Systems zu Überwachung eines Wälzlagers ist,
- Fig. 2: eine schematische Darstellung eines Systems zu Überwachung eines Wälzlagers mit weiteren Temperatursensoren ist,
- Fig. 3a: und Fig. 3b die Bereiche unterschiedlicher Belastung eines Wälzlagers unter unterschiedlichen Krafteinwirkungen darstellt,
- Fig. 4: eine schematische Darstellung der Überwachung eines Rotorblattlagers in einer Windkraftanlage ist,
- Fig. 5: eine schematische Darstellung der Überwachung eines Hauptlagers in einer Windkraftanlage ist, und
- Fig. 6: ein Flussdiagramm des Verfahrens zur Überwachung eines Wälzlagers in einer Windkraftanlage zeigt.

Im Folgenden sollen die beanspruchten Gegenstände auf Basis der begleitenden Zeichnungen näher erläutert werden. Dabei beziehen sich gleiche Bezugszeichen auf gleiche Elemente.

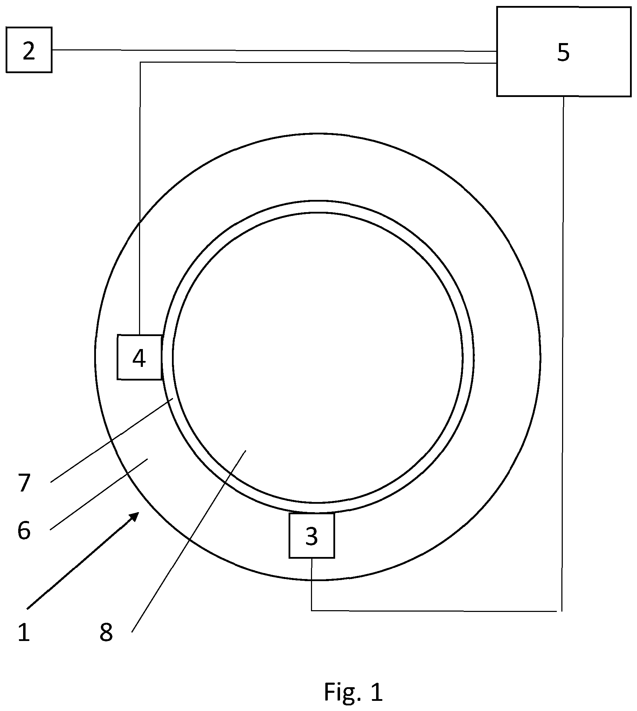

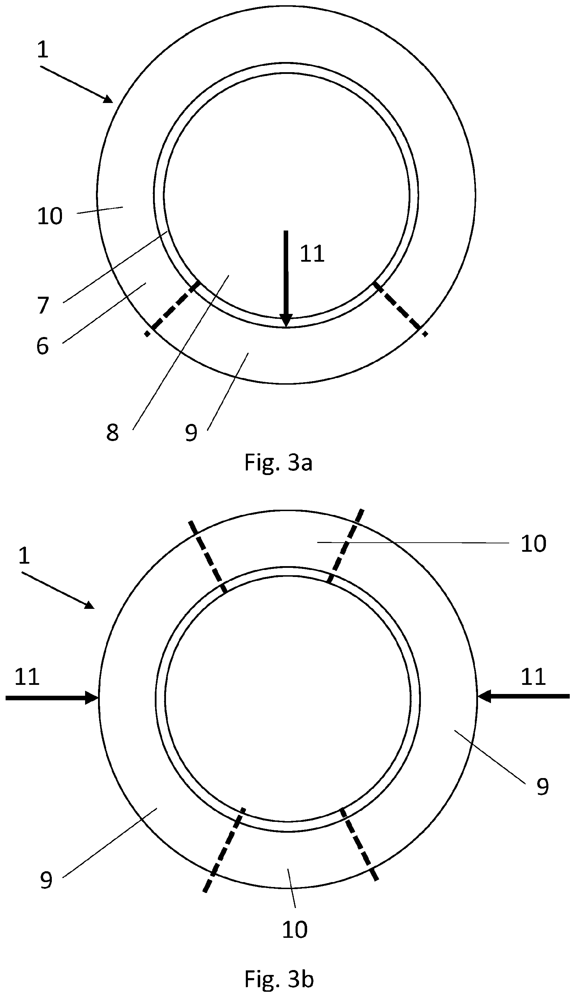

In Fig. 1 ist ein System zur Überwachung eines Wälzlagers mit drei Temperatursensoren schematisch dargestellt. Die Darstellung ist dabei vereinfacht gehalten, um die relevanten Komponenten ersichtlich zu machen. Das Wälzlager 1 besteht aus einem äußeren Ring 6 und einem inneren Ring 8. Dazwischen liegt ein Wälzkörper 7, der abstrahiert verschiedene Ausführungsformen von Wälzkörpern, wie Kugeln, Zylindern, Kegeln, Nadeln und Ähnlichen darstellen soll. Ein erster Temperatursensor 2 befindet sich in der Umgebung des Wälzlagers, die mit diesem thermisch gekoppelt ist. Ein zweiter Temperatursensor 3 und ein dritter Temperatursensor 4 sind im äußeren Ring 6 des Wälzlagers 1 angelegt und befinden sich benachbart zu oder in der inneren Lauffläche des äußeren Rings, auf der der Wälzkörper 7 abrollt. Allerding müssen der zweite und der dritte Temperatursensor nicht im äußeren Ring lokalisiert sein, auch Ausführungen mit den Sensoren an der Lauffläche des inneren Rings sind denkbar. Der zweite Temperatursensor 3 befindet sich in einem hochbelasteten Bereich des Wälzlagers, der dritte Temperatursensor 4 in einem weniger stark belasteten Bereich. Für diese Darstellung sind die Positionen der Temperatursensoren so gewählt, dass die Figur übersichtlich bleibt, in der Beschreibung zu den Fig. 3a und Fig. 3b wird jedoch näher auf das Zustandekommen der verschiedenen Belastungsbereiche eingegangen.

Die drei Temperatursensoren 2, 3, 4, sind mit einer Auswertungseinrichtung 5 verbunden. Dabei kann es sich um eine speicherprogrammierbare Steuerung, einen Rechner oder um einen spezialisierten Schaltkreis handeln. Es kann sich auch um ein Netzwerk verschiedenere Einheiten handeln, das dazu ausgelegt ist, den Zustand des Wälzlagers auf Basis der erfassten Temperaturen zu bewerten. Zur Bewertung des Zustandes wird die Differenz aus erfasster Lasttemperatur, erfasst vom zweiten Temperatursensor (3) und Leerlauftemperatur, erfasst vom dritten Temperatursensor (4) gebildet und in ein Verhältnis zu der Umgebungstemperatur, erfasst vom ersten Temperatursensor (2), gesetzt. Weicht dieser Wert von bereits im fehlerfreien Betrieb gemessenen Werten ab, so kann dies ein Hinweis für eine Beschädigung des Wälzlagers sein.

Ein verwendeter Algorithmus kann dazu ausgelegt sein, die erfassten Temperaturen mit als Referenzwerten hinterlegten, bei einem störungsfreien Betrieb zu erwartenden, Temperaturen zu vergleichen. Die als Referenzwerte verwendeten Temperaturen können aus Tests und Simulationen von baugleichen Wälzlagern stammen, sie können aber auch aus der Betriebshistorie des Wälzlagers gewonnen werden, indem angenommen wird, dass dieses zumindest in einem Zeitraum zu Beginn seines Betriebs, in welchem die Temperaturen gemessen wurden, keine Schäden aufgewiesen hat. Sind die erfassten Temperaturen höher als die Referenzwerte, liegt insbesondere in einem hochbelasteten Bereich ein größerer Temperaturanstieg vor als in einem weniger belasteten Bereich, so kann dies als Hinweis auf eine Beschädigung des Wälzlagers 1 bewertet werden. Um die Zuverlässigkeit der Bewertung zu erhöhen, können mehrere solche Bewertungen notwendig sein, bevor eine abschließende Bewertung zum Zustand des Wälzlagers getroffen wird.

In einer vorteilhaften Ausführungsform umfasst die Auswertungseinrichtung eine Datenbank. Diese enthält Referenzwerte für die Umgebungs-, Last- und Leerlauftemperatur für verschiedene Betriebszustände des Wälzlagers. Die Betriebszustände umfassen Informationen zu Last, Betriebsdauer, Drehzahl und Schmierzustand des Lagers. Enthält die Datenbank für einen Betriebszustand noch keine Referenztemperaturen, so können die erfassten Temperaturen hinterlegt werden. Ebenso kann erfasst werden, wie viele Messungen eines Betriebszustands es in der Vergangenheit gegeben hat, um eine Gewichtung der hinterlegten Referenzwerte mit dieser Anzahl durchzuführen. Auf diese Weise kann die Relevanz einer Abweichung bewertet werden.

Durch die Auswertungseinrichtung werden die erfassten Temperaturen in dieser Ausführung nur mit Referenzwerten für vergleichbare Betriebszustände verglichen, wobei Abweichungen, insbesondere Temperaturerhöhungen der erfassten Temperaturen, als Hinweis auf eine Beschädigung des Wälzlagers gedeutet werden können.

Die Auswertungseinrichtung 5 kann mit weiteren Bauteilen (nicht dargestellt) verbunden sein, um von diesen Information zum Betriebszustand zu erhalten oder an diese ein Alarmsignal zu senden, wenn die Bewertung ergibt, dass das Wälzlager beschädigt ist.

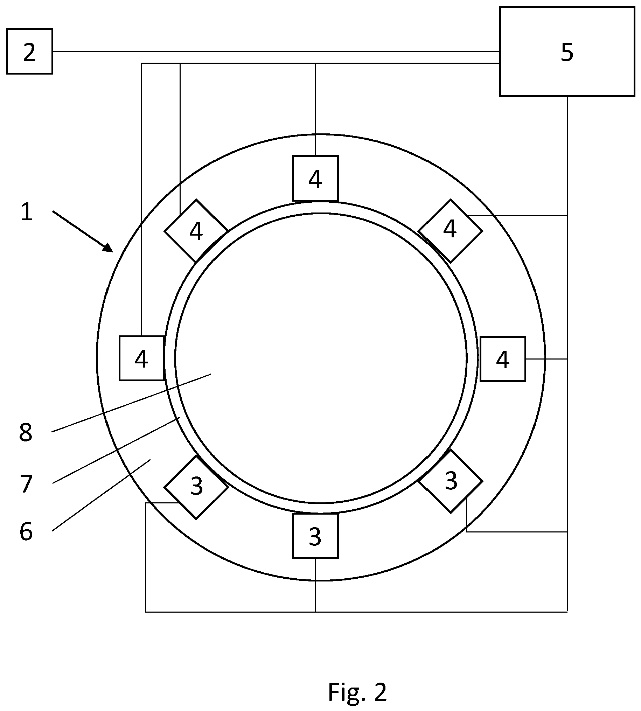

Fig. 1 zeigt eine Ausführung mit genau drei Temperatursensoren, es sind jedoch auch Ausführungen mit weiteren Temperatursensoren möglich, bei denen die Temperatur zusätzlicher Bereiche des Wälzlagers unterschiedlicher Belastung erfasst werden. Eine solche Ausführung ist in Fig. 2 dargestellt. Hier sind acht Temperatursensoren in gleichmäßigen Abständen um den Umfang des Wälzlagers verteilt. Da das Wälzlager 1 die gleiche Belastung wie in Fig. 1 erfährt, sind auch hier zweite Temperatursensoren 3 in einem stark belasteten Bereich und dritte Temperatursensoren 4 in einem weniger stark belasteten Bereich unterteilt. Durch die Verwendung weiterer Sensoren lassen sich jedoch auch Temperaturverteilungen innerhalb dieser Bereiche erfassen, zum Beispiel dadurch bedingt, dass die höchste punktuelle Last jeweils in Zentrum eines belasteten Bereichs anliegt. Beim Vergleich mit Referenzwerte lassen sich so mit größerer Genauigkeit Veränderungen in der Temperaturverteilung feststellen. Zu diesem Zweck enthält in dieser Ausführung die Datenbank zusätzliche Referenzwerte für die Messpunkte der weiteren Temperatursensoren.

Um den Einfluss von verschiedenen Biegemomenten darzustellen, die ein Wälzlager aufnehmen kann, sind in Fig. 3a und Fig. 3b zwei unterschiedliche Fälle dargestellt. Fig. 3a zeigt ein Wälzlager 1, auf das eine Kraft 11 senkrecht nach unten wirkt. Diese Kraft kann beispielsweise die Gewichtskraft einer Antriebswelle sein, die durch das Wälzlager gelagert ist. Durch diese Kraft ist der Wälzkörper 7 im unteren Bereich 9, markiert durch die gestrichelten Linien, stärker belastet als in dem Bereich 10. Es ist zu beachten, dass der Übergang zwischen dem hochbelasteten Bereich 9 und dem weniger oder nicht belasteten Bereich 10 in der Realität natürlich nicht diskret, sondern graduell ist. Eine Position in dem hochbelasteten Bereich 9 ist geeignet, um eine Lasttemperatur zu messen, eine Position in dem weniger stark belasteten Bereich 10 ist hingegen geeignet, eine Leerlauftemperatur zu messen.

Fig. 3b zeigt einen Fall, wie er zum Beispiel in einer Windkraftanlage bei einem Wälzlager, das als Rotorblattlager zur Verbindung der Rotornabe mit den Rotorblättern dient, auftreten könnte. In diesem Fall wäre ein Rotorblatt auf dem Wälzlager befestigt, sodass es aus der Bildebene hinausragen würde. Durch den Wind wirken auf das Rotorblatt Biegemomente, die dieses an das Lager weitergibt. Die Richtung dieser Kräfte ist durch die Pfeile 11 dargestellt, allerdings müssen diese nicht unbedingt gleichzeitig wirken. Je nach Stand der Rotorblätter und nach aerodynamischen Bedingungen wirken unterschiedliche Kräfte auf verschiedene Bereich des Wälzlagers. Im zeitlichen Mittel ergeben sich dadurch hochbelastete Bereiche 9 und weniger stark belastete Bereiche 10. Eine Position in einem der hochbelasteten Bereiche 9 ist geeignet, um eine Lasttemperatur zu messen, eine Position in einem der weniger stark belasteten Bereich 10 ist hingegen geeignet, eine Leerlauftemperatur zu messen.

Der Temperaturanstieg durch erhöhte Reibung an einer Beschädigung des Wälzlagers ist von der Belastung abhängig. Der Vergleich der Lasttemperatur, die in dem hochbelasteten Bereich 9 erfasst wird, und der Leerlauftemperatur, die in dem weniger stark oder nicht belasteten Bereich 10 erfasst wird, ermöglicht es daher, auch kleine Abweichungen zu registrieren und so frühzeitige Hinweise auf Beschädigungen zu erhalten.

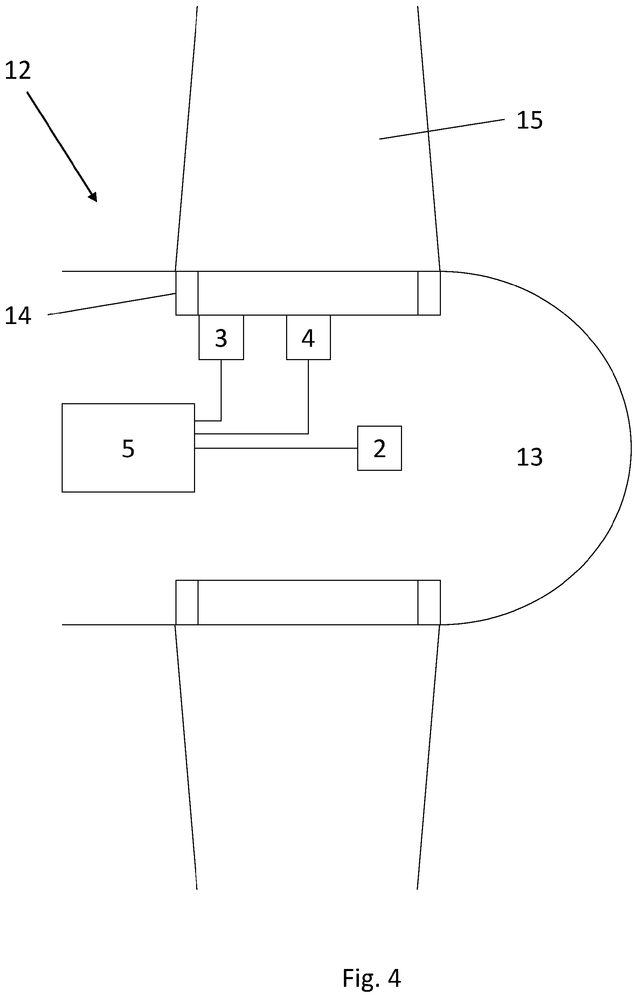

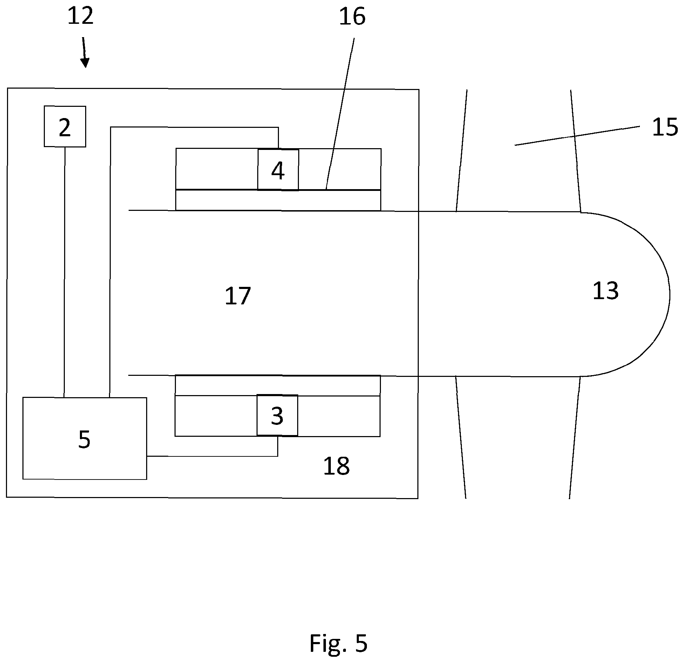

Das System zu Überwachung eines Wälzlagers ist besonders für die Verwendung in Windkraftanlagen geeignet. Beispiele für eine solche Verwendung sind in Fig. 4 und Fig. 5 gezeigt. In einer Windkraftanlage gibt es zusätzliche Größen, die Einfluss auf die Temperatur und Belastung eines Wälzlagers haben können, und deshalb Teil des zu erfassenden Betriebszustands sind. Dazu gehören Jahres- und Tageszeit, Niederschlag und Windgeschwindigkeit, sowie die vom Generator der Windkraftanlage produzierte Leistung. Außerdem macht es bei einer Windkraftanlage insbesondere Sinn, die erfassten Temperaturen über einen längeren Zeitraum statistisch auszuwerten, um Schwankungen aufgrund von Umwelteinflüssen auszuschließen.

In Fig. 4 ist gezeigt, wie das System zu Überwachung eines Rotorlagers 14 in einer Windkraftanlage 12 eingesetzt wird. Das Rotorblattlager 14 ist ein Wälzlager wie bereits in Bezug auf Fig. 1 beschrieben, das dazu dient, das Rotorblatt 15 mit der Rotornabe 13 zu verbinden und gleichzeitig ein Verdrehen des Rotorblatts 15 ermöglicht. Solche Lager sind einerseits hohen Belastungen aufgrund der auf die Rotorblätter wirkenden aerodynamischen Kräfte ausgesetzt, andererseits werden über diese Lager in der Regel nur geringe Bewegungen getätigt, sodass diese Belastungen sehr lokalisiert auf Bereiche des Wälzlagers wirken.

Das Rotorblattlager 14 in Fig. 4 ist mit einem zweiten Temperatursensor 3 und einem dritten Temperatursensor 4 versehen, die jeweils in einem hochbelasteten Bereich und in einem weniger stark belasteten Bereich (siehe Fig. 3b) die Temperatur messen. Ein erster Temperatursensor 2 misst die Temperatur in einem von dem Lager unbeeinflussten Bereich. Die Darstellung der Positionen der Sensoren ist dabei nur schematisch, um die Abbildung übersichtlich zu gestalten. Die tatsächliche Position der Temperatursensoren 3 und 4 wäre in einer Ebene mit dem Rotorblattlager 14 und der erste Temperatursensor 2 muss sich nicht zwingend in der Rotornabe befinden.

Wie in Fig. 4 angedeutet, trägt eine Rotornabe mehrere Rotorblätter. Wenn alle Rotorblattlager 14 der Windkraftanlage 12 mit einem System zur Überwachung ausgerüstet sind, ergibt sich die Möglichkeit, die erfassten Temperaturen der Rotorlager 14 als Referenzwerte für die anderen Rotorlager zu hinterlegen. Dies ist sinnvoll, da für die Rotorblattlager 14 an einer Rotornabe sehr ähnliche Bedingungen gelten und so die Beschädigung an einem Rotorblattlager 14 gut im Vergleich mit den übrigen Lagern erkannt werden kann.

In Fig. 5 ist gezeigt wie das System zur Überwachung eines Hauptlagers in einer Windkraftanlage eingesetzt wird. Das Hauptlager 16 ist ein Wälzlager wie bereits in Bezug auf Fig. 1 beschrieben, das eine Welle 17 trägt. Die Welle 17 verbindet die Rotornabe mit einem Generator (nicht gezeigt) in einer Gondel 18. Das Hauptlager 16 ist mit einem zweiten Temperatursensor 3 und einem dritten Temperatursensor 4 versehen, die jeweils in einem hochbelasteten Bereich und in einem weniger stark belasteten Bereich (siehe Fig. 3a) die Temperatur messen. Ein erster Temperatursensor 2 misst die Temperatur in einem von dem Lager unbeeinflussten Bereich der Gondel 18.

Um zusätzliche Referenzwerte für den Vergleich der Temperaturen zu erhalten, können die Messwerte von weiteren Wälzlagern (sowohl von Hauptlagern 16 als auch von Rotorblattlager 14) anderer Windkraftanlagen 12 herangezogen werden. Diese Messwerte sollten dabei unter ähnlichen Bedingungen zustande gekommen sein. Besonders geeignet sind daher Windkraftanlagen, die in ähnlicher Position in dem gleichen Windpark stehen. So kann wiederum abweichendes Temperaturverhalten eines Wälzlagers auf Grund einer Beschädigung leicht festgestellt werden.

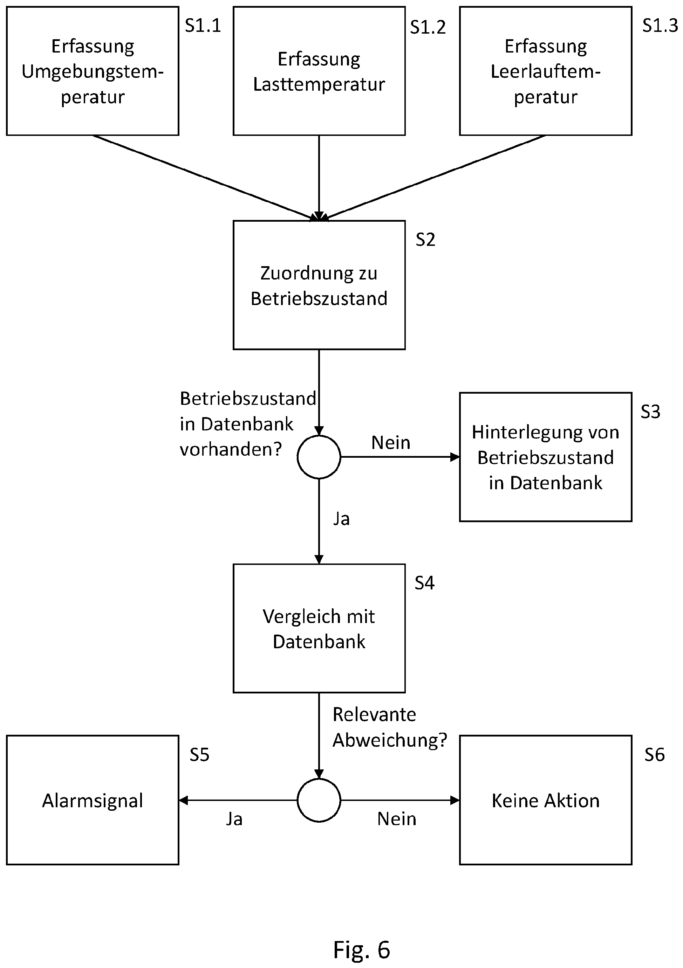

Fig. 6 ist ein Flussdiagramm, das das Verfahren der Überwachung eines Wälzlagers in einer Windkraftanlage zusammenfasst. In einem ersten Schritt S1 werden Umgebungstemperatur, Lasttemperatur und Leerlauftemperatur erfasst, jeweils an einer dafür geeigneten Position, wie bereits beschrieben.

In einem zweiten Schritt S2 werden diese Temperaturen einem Betriebszustand zugeordnet, der zusätzlich Informationen über Last, Betriebsdauer, Drehzahl, Schmierzustand, Tages- und Jahreszeit, Windgeschwindigkeit, Niederschlag und erzeugte Leistung enthalten kann.

Sind für diesen Betriebszustand noch keine Referenztemperaturen hinterlegt, so werden die erfassten Temperaturen in Schritt S3 als Referenztemperaturen hinterlegt, um für spätere Messungen Vergleiche zu ermöglichen.

Gibt es Referenztemperaturen für den Betriebszustand, so wird das Verfahren in Schritt S4 fortgesetzt, in dem die erfasst Temperaturen mit den in der Datenbank gespeicherten Referenzwerten verglichen werden. Dabei können verschiedene Algorithmen zum Einsatz kommen, insbesondere können die Referenzwerte zu einem Betriebszustand mit der Anzahl der Messungen dieses Zustands gewichtet werden, sodass Abweichungen in wohl bekannten Betriebszuständen bei der Bewertung stärker ins Gewicht fallen als Betriebszuständen in denen die Messwerte auf Grund einer geringen Anzahl von Messungen große Unsicherheiten haben.

Wird eine als relevant bewertete Abweichung der erfassten Temperaturen von den Referenzwerten registriert, so wird ein Alarmsignal S5 ausgesendet. Das Verfahren kann auch erfordern, dass diese Abweichung in mehreren Messungen bestätigt wird, um eine zuverlässige Bewertung des Zustandes des Wälzlagers zu gewährleisten.

Wird hingegen keine Abweichung registriert, oder wird eine vorhandene Abweichung nicht als relevant bewertet, so liegt kein Handlungsbedarf vor. Das Verfahren kann daraufhin kontinuierlich oder in regelmäßigen Zeitabständen wiederholt werden. Auf diese Weise ermöglicht das Verfahren eine einfache und zuverlässige Überwachung eines Wälzlagers in einer Windkraftanlage.

Die hier gezeigten Ausführungsbeispiele sind nicht begrenzend. Insbesondere können die Merkmale dieser Ausführungsbeispiele miteinander kombiniert werden, um zusätzliche Effekte zu erzielen. Für den Fachmann ist offensichtlich, dass Änderungen an diesen Ausführungsbeispielen vorgenommen werden können, ohne die grundlegenden Prinzipien des Gegenstandes dieser Schutzanmeldung zu verlassen, deren Bereich in den Ansprüchen definiert ist.

## Patentansprüche

1. System zur Überwachung eines Wälzlagers, umfassend
das Wälzlager (1),
mindestens drei Temperatursensoren, wobei
ein erster Temperatursensor (2) in der Umgebung des Wälzlagers (1) zur Erfassung einer Umgebungstemperatur positioniert ist,
ein zweiter Temperatursensor (3) an einem hochbelasteten Bereich (9) entlang eines Umfangs des Wälzlagers (1), vorzugsweise benachbart zu einer Lauffläche des Wälzlagers (1), zur Erfassung einer Lasttemperatur positioniert ist, **gekennzeichnet dadurch, dass**
ein dritter Temperatursensor (4) an einem weniger oder nicht belasteten Bereich (10) entlang des Umfangs des Wälzlagers (1), vorzugsweise benachbart zu einer Lauffläche des Wälzlagers (1), zur Erfassung einer Leerlauftemperatur positioniert ist, und
eine Auswertungseinrichtung (5), die dazu konfiguriert ist den Zustand des Wälzlagers (1) auf Basis der erfassten Temperaturen zu bewerten.

2. System nach Anspruch 1, **dadurch gekennzeichnet, dass** der hochbelastete Bereich (10) des Wälzlagers (1) an dem die Lasttemperatur erfasst wird, ein Bereich ist, in dem ein Wälzkörper (7) hohe Kräfte (11) erfährt.

3. System nach einem der Ansprüche 1 oder 2, **dadurch gekennzeichnet, dass** die Auswertungseinrichtung (5) außerdem konfiguriert ist ein Alarmsignal zu senden, wenn eine oder mehrere Bewertungen des Zustands des Wälzlagers (1) auf eine Beschädigung des Wälzlagers (1) hinweisen.

4. System nach einem der vorhergehenden Ansprüche, **dadurch gekennzeichnet,**
**dass** die Auswertungseinrichtung (5) zusätzlich einen Betriebszustand des Wälzlagers (1), umfassend mindestens eine Größe von anliegender Last, Betriebsdauer, Drehzahl und/oder Schmierzustand erfasst, und
**dass** die Auswertungseinrichtung eine Datenbank umfasst, in der Referenzwerte zum Vergleich mit der Umgebungstemperatur, Lasttemperatur und Leerlauftemperatur für verschiedene Betriebszustände des Wälzlagers (1) hinterlegt sind.

5. System nach Anspruch 4, **dadurch gekennzeichnet, dass** die Auswertungseinrichtung (5) dazu konfiguriert ist, bei Betriebszuständen für die noch keine Referenzwerte in der Datenbank hinterlegt sind, die erfassten Temperaturen als Referenzwerte zu hinterlegen.

6. System nach einem der Ansprüche 4 oder 5, **dadurch gekennzeichnet, dass** die Referenzwerte der Datenbank mit einer Anzahl von Messungen in einem bestimmten Betriebszustand gewichtet sind.

7. Windkraftanlage (12), umfassend mindestens ein System zu Überwachung eines Wälzlagers (1) nach einem der vorhergehenden Ansprüche.

8. Windkraftanlage (12) nach Anspruch 7, **dadurch gekennzeichnet, dass** die Auswertungseinrichtung dazu konfiguriert ist, einen Betriebszustand des Wälzlagers (1) umfassend mindestens eine der folgenden Eigenschaften: Windgeschwindigkeit, Jahreszeit, Tageszeit, Niederschlag und erzeugte Leistung erfasst.

9. Windkraftanlage (12) nach einem der Ansprüche 7 oder 8, **dadurch gekennzeichnet, dass** die Auswertungseinrichtung (5) konfiguriert ist, die erfassten Temperaturen für bestimmte Zeitintervalle statistisch auszuwerten.

10. Windkraftanlage (12) nach einem der Ansprüche 7 bis 9, **dadurch gekennzeichnet, dass** die Auswertungseinrichtung (5) dazu konfiguriert ist den Zustand des Wälzlagers (1) auf Basis eines Vergleichs der erfassten Temperaturen mit Referenzwerten, die in mindestens einer Referenzwindkraftanlage unter ähnlichen Bedingungen erfasst werden, zu bewerten.

11. Windkraftanlage (12) nach einem der Ansprüche 7 bis 10, **dadurch gekennzeichnet, dass** ein überwachtes Wälzlager ein Rotorblattlager (14) ist und die Auswerteeinrichtung (5) dazu konfiguriert ist den Zustand des Rotorblattlagers (14) auf Basis eines Vergleichs der erfassten Temperaturen mit Referenzwerten, die an mindestens einem anderen Rotorblattlager (14) derselben Windkraftanlage (12) erfasst werden, zu vergleichen

12. Verfahren zur Überwachung eines Wälzlagers (1), vorzugsweise eines Wälzlagers (1) einer Windkraftanlage (12), umfassend die Schritte:
Erfassung mehrerer Temperaturen (S1), davon mindestens
eine Umgebungstemperatur (S1.1) in einer Umgebung des Wälzlagers (1),
eine Lasttemperatur (S1.2) in an einem hochbelasteten Bereich (6) entlang eines Umfangs des Wälzlagers (1), möglichst nahe an einer Lauffläche des Wälzlagers (1), **gekennzeichnet dadurch, dass** die Erfassung mehrerer Temperaturen (S1) weiterhin umfasst:
eine Leerlauftemperatur (S1.3) in an einem wenig oder nicht belasteten Bereich (7) entlang des Umfangs des Wälzlagers (1), möglichst nahe an einer Lauffläche des Wälzlagers (1),
Bewertung des Zustands des Wälzlagers (1) auf Basis der erfassten Temperaturen.

13. Verfahren nach Anspruch 12, zusätzlich umfassend die Schritte:
Zuordnung der erfassten Temperaturen zu einem Betriebszustand (S2), der mindesten mindestens eine Größe von anliegender Last, Betriebsdauer, Drehzahl, Schmierzustand, Windgeschwindigkeit, Jahreszeit, Tageszeit, Niederschlag und erzeugte Leistung umfasst, und
Vergleich der erfassten Temperaturen mit für den Betriebszustand in einer Datenbank hinterlegten Referenzwerten (S4).

14. Verfahren nach einem der Ansprüche 12 oder 13, zusätzlich umfassend den Schritt:
Aussenden eines Alarmsignals (S5) bei einer oder mehreren Bewertungen des Zustands, die auf eine Beschädigung des Wälzlagers (1) hinweisen.

15. Verfahren nach einem der Ansprüche 12 bis 14, **dadurch gekennzeichnet, dass**, wenn für einen Betriebszustand noch keine Referenzwerte in der Datenbank hinterlegt sind, die erfassten Temperaturen für diesen Betriebszustand als Referenzwerte hinterlegt (S3) werden, und/oder dass die in der Datenbank hinterlegten Referenzwerte mit einer Anzahl von Messungen in einem bestimmten Betriebszustand gewichtet sind.

## Claims

1. A system for monitoring a rolling element bearing comprising
the rolling element bearing (1),
at least three temperature sensors, wherein
a first temperature sensor (2) is positioned in the environment of the rolling element bearing (1) to detect an environmental temperature;
a second temperature sensor (3) is positioned at a highly loaded region (9) along a circumference of the rolling element bearing (1), preferably adjacent to a rolling surface of the rolling element bearing (1), to detect a load temperature; **characterized in that**
a third temperature sensor (4) is positioned at a less loaded or unloaded region (10) along a circumference of the rolling element bearing (1), preferably adjacent to a rolling surface of the rolling element bearing (1), to detect an idling temperature; and
an evaluation device (5) that is configured to evaluate the state of the rolling element bearing (1) based on the detected temperatures.

2. A system in accordance with claim 1, **characterized in that** the highly loaded region (10) of the rolling element bearing (1) at which the load temperature is detected is a region in which a rolling element (7) experiences high forces (11).

3. A system in accordance with one of the claims 1 or 2, **characterized in that** the evaluation device (5) is moreover configured to transmit an alarm signal if one or more evaluations of the state of the rolling element bearing (1) indicate damage to the rolling element bearing (1).

4. A system in accordance with one of the preceding claims, **characterized in that**
the evaluation device (5) additionally detects an operating state of the rolling element bearing (1) comprising at least one parameter from applied load, operating time, speed, and/or lubrication state; and
**in that** the evaluation device comprises a database in which reference values are stored for a comparison with the environmental temperature, load temperature, and idling temperature for different operating states of the rolling element bearing (1).

5. A system in accordance with claim 4, **characterized in that** the evaluation device (5) is configured to store the detected temperatures as reference values in operating states for which no reference values have yet been stored in the database.

6. A system in accordance with one of the claims 4 or 5, **characterized in that** the reference values of the database are weighted with a number of measurements in a specific operating state.

7. A wind turbine (12) comprising at least one system for monitoring a rolling element bearing (1) in accordance with one of the preceding claims.

8. A wind turbine (12) in accordance with claim 7, **characterized in that** the evaluation device is configured to detect an operating state of the rolling element bearing (1) comprising at least one of the following properties: wind speed, time of year, time of day, precipitation, and generated power.

9. A wind turbine (12) in accordance with one of the claims 7 or 8, **characterized in that** the evaluation device (5) is configured to statistically evaluate the detected temperatures for specific time intervals.

10. A wind turbine (12) in accordance with one of the claims 7 to 9, **characterized in that** the evaluation device (5) is configured to evaluate the state of the rolling element bearing (1) based on a comparison of the detected temperatures with reference values that are detected in at least one reference wind turbine under similar conditions.

11. A wind turbine (12) in accordance with one of the claims 7 to 10, **characterized in that** a monitored rolling element bearing is a rotor blade bearing (14) and the evaluation device (5) is configured to compare the state of the rotor blade bearing (14) based on a comparison of the detected temperatures with reference values that are detected at at least one other rotor blade bearing (14) of the same wind turbine (12).

12. A method of monitoring a rolling element bearing (1), preferably a rolling element bearing (1) of a wind turbine (12), comprising the steps:
detecting a plurality of temperatures (S1), at least one being
an environmental temperature (S1.1) in an environment of the rolling element bearing (1);
a load temperature (S1.2) at a highly loaded region (6) along a circumference of the rolling element bearing (1), as close as possible to a rolling surface of the rolling element bearing (1), **characterized in that** the detection of a plurality of temperatures (S1) further comprises:
an idling temperature (S1.3) at a less loaded or unloaded region (7) along a circumference of the rolling element bearing (1), as close as possible to a rolling surface of the rolling element bearing (1); and
evaluating the state of the rolling element bearing (1) based on the detected temperatures.

13. A method in accordance with claim 12, additionally comprising the steps:
associating the detected temperatures with an operating state (S2) that at least comprises at least one parameter from applied load, operating time, speed, lubrication state, wind speed, time of year, time of day, precipitation, and generated power; and
comparing the detected temperatures with reference value (S4) stored in a database for the operating state.

14. A method in accordance with one of the claims 12 or 13, additionally comprising the step:
transmitting an alarm signal (S5) on one or more evaluations of the state that indicate damage to the rolling element bearing (1).

15. A method in accordance with one of the claims 12 to 14, **characterized in that** if no reference values have yet been stored in the database for an operating state, the detected temperatures for this operating state are stored (S3) as reference values,and/or that the reference values stored in the database are weighted with a number of measurements in a specific operating state.

## Revendications

1. Système de surveillance d'un palier à rouleaux, comprenant
le palier à rouleaux (1),
au moins trois capteurs de température, dans lequel
un premier capteur de température (2) est positionné à proximité du palier à rouleaux (1) afin d'enregistrer une température ambiante,
un deuxième capteur de température (3) est positionné dans une région fortement chargée (9) le long d'une circonférence du palier à rouleaux (1), de manière préférée au voisinage d'une surface de palier à rouleaux du palier à rouleaux (1), afin d'enregistrer une température de charge, **caractérisé en ce que**
un troisième capteur de température (4) est positionné dans une région moins chargée ou non chargée (10) le long de la circonférence du palier à rouleaux (1), de manière préférée au voisinage d'une surface de roulement du palier à rouleaux (1), afin d'enregistrer une température de point mort, et
un dispositif d'évaluation (5) qui est configuré pour évaluer l'état du palier à rouleaux (1) en se basant sur les températures enregistrées.

2. Système selon la revendication 1, **caractérisé en ce que** la région fortement chargée (10) du palier à rouleaux (1) au niveau de laquelle la température de charge est enregistrée est une région au sein de laquelle un élément roulant (7) subit des forces élevées (11).

3. Système selon la revendication 1 ou 2, **caractérisé en ce que** le dispositif d'évaluation (5) est également configuré pour envoyer un signal d'alarme si une ou plusieurs évaluation(s) de l'état du palier à palier à rouleaux (1) indique(nt) un endommagement du palier à rouleaux (1).

4. Système selon l'une quelconque des revendications précédentes, **caractérisé en ce que**
le dispositif d'évaluation (5) enregistre en outre un état de fonctionnement du palier à rouleaux (1), comprenant au moins une variable parmi la charge appliquée, le temps de fonctionnement, la vitesse de rotation et/ou l'état de lubrification, et
le dispositif d'évaluation comprend une base de données dans laquelle des valeurs de référence sont stockées en vue d'une comparaison avec la température ambiante, la température de charge et la température de point mort pour différents états de fonctionnement du palier à rouleaux (1).

5. Système selon la revendication 4, **caractérisé en ce que** le dispositif d'évaluation (5) est configuré pour stocker en tant que valeurs de référence les températures enregistrées, pour des états de fonctionnement pour lesquels aucune valeur de référence n'a encore été stockée dans la base de données.

6. Système selon la revendication 4 ou 5, **caractérisé en ce que** les valeurs de référence de la base de données sont pondérées par un nombre de mesures dans un état de fonctionnement spécifique.

7. Éolienne (12), comprenant au moins un système de surveillance d'un palier à rouleaux (1) selon l'une quelconque des revendications précédentes.

8. Éolienne (12) selon la revendication 7, **caractérisée en ce que** le dispositif d'évaluation est configuré pour enregistrer un état de fonctionnement du palier à rouleaux (1) comprenant au moins une des propriétés ci-dessous : vitesse du vent, saison, heure de la journée, précipitations et puissance générée.

9. Éolienne (12) selon la revendication 7 ou 8, **caractérisée en ce que** le dispositif d'évaluation (5) est configuré pour évaluer statistiquement les températures enregistrées pour des intervalles de temps spécifiques.

10. Éolienne (12) selon l'une quelconque des revendications 7 à 9, **caractérisée en ce que** le dispositif d'évaluation (5) est configuré pour évaluer l'état du palier à rouleaux (1) en se basant sur une comparaison des températures enregistrées avec des valeurs de référence qui sont enregistrées dans au moins une éolienne de référence dans des conditions similaires.

11. Éolienne (12) selon l'une quelconque des revendications 7 à 10, **caractérisée en ce que** le palier à rouleaux surveillé est un palier de pale de rotor (14) et le dispositif d'évaluation (5) est configuré pour comparer l'état du palier de pale de rotor (14) en se basant sur une comparaison des températures enregistrées avec des valeurs de référence qui sont enregistrées au niveau d'au moins un autre palier de pale de rotor (14) de la même éolienne (12).

12. Procédé de surveillance d'un palier à rouleaux (1), de manière préférée d'un palier à rouleaux (1) d'une éolienne (12), comprenant les étapes ci-dessous consistant à :
enregistrer plusieurs températures (S1), dont au moins
une température ambiante (S1.1) dans un environnement du palier à rouleaux (1),
une température de charge (S1.2) dans une région fortement chargée (6) le long d'une circonférence du palier à rouleaux (1), de manière aussi proche que possible d'une surface de roulement du palier à rouleaux (1), **caractérisé en ce que** l'enregistrement de plusieurs températures (S1) comprend en outre :
une température de point mort (S1.3) dans une région faiblement chargée ou non chargée (7) le long de la circonférence du palier à rouleaux (1), de manière aussi proche que possible d'une surface de roulement du palier à rouleaux (1),
une étape consistant à évaluer l'état du palier à rouleaux (1) en se basant sur les températures enregistrées.

13. Procédé selon la revendication 12, comprenant en outre les étapes consistant à :
associer les températures enregistrées à un état de fonctionnement (S2), qui comprend au moins une variable parmi la charge appliquée, le temps de fonctionnement, la vitesse de rotation, l'état de lubrification, la vitesse du vent, la saison, l'heure de la journée, les précipitations et la puissance générée, et
comparer les températures enregistrées avec des valeurs de référence (S4) stockées dans une base de données pour l'état de fonctionnement.

14. Procédé selon la revendication 12 ou 13, comprenant en outre l'étape consistant à :
émettre un signal d'alarme (S5) lorsqu'une ou plusieurs évaluation(s) de l'état indique(nt) un endommagement du palier à rouleaux (1).

15. Procédé selon l'une quelconque des revendications 12 à 14, **caractérisé en ce que**, si aucune valeur de référence n'est encore stockée dans la base de données pour un état de fonctionnement, les températures enregistrées pour ledit état de fonctionnement sont stockées en tant que valeurs de référence (S3), et/ou les valeurs de référence stockées dans la base de données sont pondérées par un nombre de mesures dans un état de fonctionnement spécifique.
